# EUROPÄISCHE PATENTANMELDUNG

(11) **EP 0 965 776 A2**
(43) Veröffentlichungstag der Anmeldung: **22.12.1999**
(21) Anmeldenummer: 99108908.7
(22) Anmeldetag: 05.05.1999
(51) Int. Cl.: F16H 61/02

(54) **Verfahren und Vorrichtung zum Steuern eines automatisch schaltbaren Getriebes eines Kraftfahrzeuges**

(30) Priorität: 17.06.1998 DE 19826861
(71) Anmelder: GETRAG Getriebe- und Zahnradfabrik Hermann Hagenmeyer GmbH & Cie, D-71636 Ludwigsburg (DE)
(72) Erfinder: Seufert, Martin, 71229 Leonberg (DE); Rinderknecht, Stephan, 72810 Gomaringen (DE)
(74) Vertreter: Witte, Alexander, Dr.-Ing.

(57) **Zusammenfassung**

Ein Verfahren und eine Vorrichtung dienen zum Steuern eines automatisch schaltbaren Getriebes (22) eines Kraftfahrzeugs. In Abhängigkeit von einer manuellen Betätigung eines Schaltelementes (10) wird hoch- oder rückgeschaltet. Die Dauer (tₛ) des Schaltvorganges wird dabei individuell für jeden Schaltvorgang in Abhängigkeit von einer physikalischen Größe (v) der manuellen Betätigung des Schaltelementes (10) eingestellt.

## Beschreibung

Die Erfindung betrifft ein Verfahren sowie eine Vorrichtung zum Steuern eines automatisch schaltbaren Getriebes eines Kraftfahrzeugs, bei dem bzw. der in Abhängigkeit von einer manuellen Betätigung eines Schaltelementes das Getriebe servomechanisch hoch- oder rückgeschaltet wird.

Die Erfindung ist grundsätzlich bei allen Getrieben einsetzbar, die automatisch schaltbar sind. Hierzu gehören die sogenannten automatisierten Stufen- oder Schaltgetriebe (ASG), vollautomatische Stufengetriebe mit vorgeschaltetem hydrodynamischem Wandler, stufenlose Getriebe (CVT) mit Anfahrelementen, stufenlose Getriebe (IVT) ohne separate Anfahrelemente, Doppelkupplungsgetriebe und dergleichen. Wenn die Erfindung im Rahmen der vorliegenden Anmeldung anhand des Beispiels eines automatisierten Stufengetriebes erläutert wird, so ist dies folglich nicht einschränkend zu verstehen.

Automatisierte Stufengetriebe ähneln in ihrem Aufbau weitgehend den herkömmlichen von Hand schaltbaren Stufengetrieben mit Zugkraftunterbrechung. In Abweichung davon wird jedoch bei den automatisierten Stufengetrieben eine hydraulische, pneumatische, elektromotorische oder magnetische Servomechanik eingesetzt, um die Gänge des Stufengetriebes einzulegen bzw. zu trennen. Parallel dazu wird die dem Stufengetriebe zugeordnete Kupplung betätigt. Bei Mehrkupplungsgetrieben werden mehrere Kupplungen derart betätigt, daß keine Zugkraftunterbrechung entsteht.

Zum Hoch- bzw. Rückschalten eines derartigen automatisierten Stufengetriebes ist ein Schaltelement vorgesehen. Das Schaltelement kann z.B. ähnlich wie ein herkömmlicher Schalthebel eines manuellen Stufengetriebes ausgebildet sein, wobei dieser Schalthebel z.B. zum Hochschalten nach vorne und zum Rückschalten nach hinten verschwenkt wird, während er nach dem Schaltvorgang selbsttätig in eine neutrale Mittelstellung zurückkehrt. Statt eines Schaltelementes in Gestalt eines herkömmlichen Schalthebels kann auch eine Schaltwippe verwendet werden, die am Lenkrad des Fahrzeugs oder zwischen den Vordersitzen des Fahrzeugs angebracht sein kann.

Bei anderen automatisierten Stufengetrieben, bspw. bei Stufengetrieben von Motorsportfahrzeugen, werden hingegen zwei separate Schalter verwendet, von denen der eine eine Hochschaltung und der andere eine Rückschaltung bewirkt. Diese beiden Schalter sind dann vorzugsweise in das Lenkrad des Kraftfahrzeugs integriert.

Bei automatisierten Stufengetrieben der vorstehend erläuterten Art wird die Schaltdauer fest eingestellt.

Andererseits ist es von vollautomatisierten Stufengetrieben ohne Zugkraftunterbrechung, d.h. üblicherweise Planetengetrieben mit vorgeschaltetem hydrodynamischem Wandler, bekannt, unterschiedliche Fahrprogramme einzustellen. Diese Fahrprogramme, die unterschiedlichen Schaltgeraden bzw. Schaltmustern entsprechen, können z.B. nach "sportlich", "sparsam" und "komfortabel" unterteilt sein. Es ist in diesem Zusammenhang bekannt, das "sportliche" Fahrprogramm mit höheren Schaltpunkten auszulegen als ein "normales" oder Komfortprogramm. Eine höheres Ausdrehen der Gänge führt beim Hochschalten zu einer höheren Gesamtbeschleunigung, andererseits muß diese "sportlichere" Fahrweise durch Komforteinbußen erkauft werden, weil diese Fahrweise mit höheren Schaltkräften bei höheren Drehzahlen zu einer Erhöhung des Schaltrucks führt.

Bei stufenlosen Getrieben (CVT oder IVT) ist es ebenfalls bekannt, nur bestimmte Schaltpunkte anzusteuern, um dem Fahrer das gewohnte Gefühl eines schaltenden Stufengetriebes zu vermitteln. Auch in diesem Falle treten somit endliche Schaltzeiten auf, um zwischen zwei "Gängen", d.h. Kennlinienpunkten des an sich stufenlosen Getriebes hin- und herzuschalten.

Schließlich sind im Bereich vollautomatisierter Stufengetriebe auch sogenannte adaptive Getriebesteuerungen bekannt, bei denen nicht mehr durch Verstellen eines Schalters zwischen verschiedenen Fahrprogrammen hin- und hergeschaltet werden kann, sondern das Getriebe innerhalb eines Lernprozesses aus dem jeweiligen Fahrverhalten des Fahrers von selbst eine eher "sportliche" oder "komfortable" Schaltcharakteristik auswählt.

Adaptive Getriebesteuerungen haben jedoch den Nachteil, daß sie mit einer größeren Zeitkonstante arbeiten müssen, da ein sich änderndes Fahrverhalten des Fahrers erst langsam eingelernt wird, um hektische Veränderungen im Schaltverhalten zu vermeiden. Wenn jedoch der Fahrer eines Fahrzeugs bspw. gezwungenermaßen auf einer Landstraße ohne Überholmöglichkeit längere Zeit in einer Kolonne fährt, erkennt die adaptive Getriebesteuerung dies als den Wunsch des Fahrers nach komfortabler Fahrweise und verlängert die Schaltzeiten entsprechend. Wenn sich dann plötzlich die Möglichkeit des Überholens ergibt und der Fahrer schnell beschleunigen möchte, so kann dies nicht im an sich möglichen Ausmaße geschehen, weil die adaptive Getriebesteuerung erst über einen längeren Zeitraum hinweg erkennen muß, daß vom Fahrer nunmehr eine "sportliche" Fahrweise mit entsprechend kürzeren Schaltzeiten gewünscht wird.

Aus der DE 196 25 502 ist ferner noch eine Einrichtung zur Längsbewegungssteuerung eines Kraftfahrzeuges bekannt. Bei dieser bekannten Einrichtung wird die einzustellende Geschwindigkeit oder die einzustellende positive oder negative Beschleunigung, d.h. Verzögerung, gemäß einer vorgegebenen Kennlinie in Abhängigkeit von der Auslenkung eines vom Fahrer handbetätigten Stellelementes oder der auf das Stellelement ausgeübten Betätigungskraft festgelegt.

Für den Fall der einzustellenden Geschwindigkeit oder der einzustellenden positiven Beschleunigung wird daher bei dieser bekannten Einrichtung sinngemäß ebenso vorgegangen wie bei einem konventionellen Gaspedal. Bei einem Gaspedal richtet sich nämlich die effektive Beschleunigung des Fahrzeugs nicht nur nach der absoluten Auslenkung des Gaspedals, sondern darüber hinaus auch nach der Geschwindigkeit, mit der das Gaspedal durchgetreten wird.

Schließlich ist es allgemein aus der Technik der vollautomatisierten Stufengetriebe bekannt, ein sogenanntes "Kick-down" vorzusehen. Hierunter versteht man eine Ausbildung des Getriebes derart, daß bei voll durchgetretenem Gaspedal, und zwar über einen mit einer bestimmten Betätigungskraft überwindbaren Druckpunkt hinaus, die Schaltpunkte des vollautomatisierten Stufengetriebes in dem Sinne verändert werden, daß erst später hochgeschaltet wird, so daß höhere Drehzahlbereiche des Motors im Interesse einer größeren Beschleunigung des Fahrzeugs ausgenutzt werden können.

In allen vorgenannten Fällen bleiben jedoch die Schaltzeiten von der Ansteuerung her unverändert; es ergeben sich lediglich mittelbar geringfügige Änderungen als Folge der Verschiebung der Schaltpunkte.

Der Erfindung liegt demgegenüber die Aufgabe zugrunde, ein Verfahren und eine Vorrichtung der vorstehend genannten Art dahingehend weiterzubilden, daß individuell für jeden Schaltvorgang eine Einstellung der Dauer des Schaltvorganges vorgenommen werden kann, wobei durch geeignete Auswahl der Kriterien eine optimale Anpassung an den Schaltwillen des Fahrers möglich ist.

Bei einem Verfahren der eingangs genannten Art wird diese Aufgabe erfindungsgemäß dadurch gelöst, daß die Dauer des Schaltvorganges individuell für jeden Schaltvorgang in Abhängigkeit von einer physikalischen Größe der manuellen Betätigung des Schaltelementes eingestellt wird.

Bei einer Vorrichtung der eingangs genannten Art wird die Aufgabe erfindungsgemäß dadurch gelöst, daß Mittel vorgesehen sind, um die Dauer des Schaltvorganges individuell für jeden Schaltvorgang in Abhängigkeit von einer physikalischen Größe der manuellen Betätigung des Schaltelementes einzustellen.

Die der Erfindung zugrundeliegende Aufgabe wird auf diese Weise vollkommen gelöst.

Während nämlich bei herkömmlichen automatisierten Stufengetrieben der eingangs genannten Art eine Verstellung der Dauer des Schaltvorganges nur werksseitig möglich war und selbst bei vollautomatisierten Stufengetrieben mit manuell oder selbsttätig (adaptiv) einstellbaren Schaltprogrammen eine Veränderung der Dauer des Schaltvorganges allenfalls über einen längeren Zeitraum hinweg, d.h. langsam, möglich war, gestattet es die Erfindung erstmals, bei jedem Schaltvorgang individuell auf Fahrerwunsch festzulegen, ob die Schaltung nun schnell oder langsam durchgeführt werden soll. Dies gestattet es dem Fahrer bspw., bei einer kritischen Überholsituation unter Inkaufnahme einer Komforteinbuße einen sehr schnellen und damit effektiven Schaltvorgang auszuführen, während bei üblicher Fahrweise komfortabel geschaltet werden kann.

Wenn im Rahmen der vorliegenden Erfindung von einer Verkürzung der Schaltdauer oder Schaltzeit die Rede ist, so soll dies nicht in dem Sinne einschränkend verstanden werden, daß ein bestimmter Wert der Auslenkgeschwindigkeit oder Auslenkbeschleunigung oder Auslenkkraft des Schaltelementes zu einer definierten Schaltdauer führt. Vielmehr kann ein solcher physikalischer Eingangswert je nach Schaltzustand des Getriebes bzw. Betriebszustand des Getriebes zu unterschiedlichen Schaltdauern führen, beispielsweise in Abhängigkeit davon, ob hoch- oder rückgeschaltet wird, ob eine Zug- oder Schubschaltung vorliegt und dergleichen.

Bei Ausführungsformen der Erfindung wird die Dauer des Schaltvorganges in Abhängigkeit von der Geschwindigkeit oder der Beschleunigung oder der Kraft oder einer zeitlichen Änderung der Kraft der manuellen Betätigung eingestellt.

Diese Maßnahmen tragen der Tatsache Rechnung, daß ein Fahrer, der einen schnellen Schaltvorgang wünscht, bereits instinktiv das Schaltelement schnell bzw. kräftig betätigt und schon auf diese Weise unbewußt signalisiert, daß der Schaltvorgang schnell ablaufen soll. Es ist daher bei diesen Ausführungsformen der Erfindung kein gesonderter Denkvorgang mehr erforderlich, insbesondere keine gesonderte Betätigung eines weiteren Schaltelementes zur Einstellung der Schaltdauer.

Erfindungsgemäß ist weiter vorgesehen, die Dauer des Schaltvorganges mit zunehmender physikalischer Größe zu verkürzen bzw. einem Sensor zum Erfassen diese physikalischen Größe eine entsprechende Kennlinienstufe nachzuschalten, die insbesondere eine degressive Kennlinie aufweist.

Schließlich ist besonders bevorzugt, wenn erfindungsgemäße Vorrichtungen in an sich bekannter Weise alternativ mit einem in zwei Schaltrichtungen verschwenkbaren Schalthebel oder mit zwei separaten Schaltern für jeweils eine Schaltrichtung versehen sind.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein äußerst schematisiertes Blockschaltbild einer ersten Ausführungsform einer erfindungsgemäßen Vorrichtung, gleichzeitig zur Erläuterung einer ersten Ausführungsform eines erfindungsgemäßen Verfahrens;
- Fig. 2: eine erste Variante zum Ausführungsbeispiel gemäß Fig. 1;
- Fig. 3: eine zweite Variante zum Ausführungsbeispiel gemäß Fig. 1;
- Fig. 4: eine dritte Variante zum Ausführungsbeispiel gemäß Fig. 1; und
- Fig. 5: ein weiteres Ausführungsbeispiel einer erfindungsgemäßen Vorrichtung.

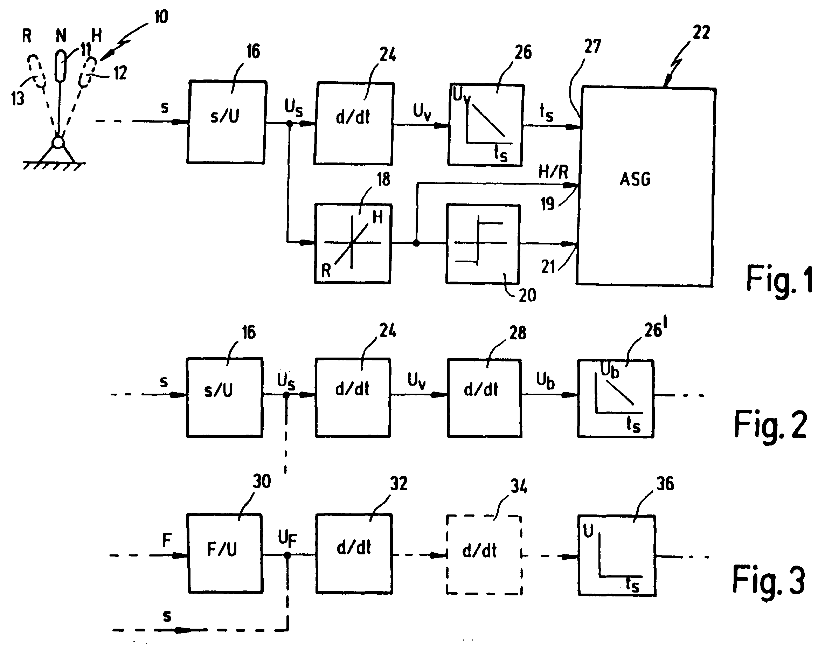

In Fig. 1 bezeichnet 10 insgesamt einen in zwei Richtungen verschwenkbaren Schalthebel eines Kraftfahrzeugs. Der Schalthebel 10 befindet sich normalerweise in einer mittleren Neutralstellung 11. Aus der Neutralstellung 11 kann er in eine Schaltrichtung, bspw. nach vorne, in eine Hochschaltstellung 12 verschwenkt werden oder alternativ in die entgegengesetzte Richtung (nach hinten) in eine Rückschaltstellung 13. Die Schaltstellungen 12 und 13 werden dabei in an sich bekannter Weise jeweils nur kurzzeitig eingenommen, um der Getriebesteuerung ein entsprechendes Hoch- bzw. Rückschaltsignal zu übermitteln. Nach Auslösung des Schaltvorganges läuft dieser im übrigen automatisiert ab und der Schalthebel 10 kehrt selbsttätig in seine Neutralstellung 11 zurück. Der Schalthebel 10 kann wie ein üblicher Gangschalthebel zwischen den Vordersitzen eines Kraftfahrzeuges angeordnet sein. Alternativ kann der Schalthebel 10 auch als Wippe ausgebildet sein, die ebenfalls zwischen den Vordersitzen oder am Lenkrad des Fahrzeugs angeordnet ist.

Der Schalthebel 10 ist mit einem Sensor verbunden, der bei dem in Fig. 1 dargestellten Ausführungsbeispiel als Weg-/Spannungswandler bzw. als Winkel-/Spannungswandler ausgebildet ist. Der Verschwenkweg s des Schalthebels 10 wird somit in eine Ausgangsspannung Uₛ umgesetzt. Dieses Signal Uₛ gelangt nun einerseits auf eine Erkennungsstufe 18, die differenziert, ob ein Hochschaltsignal H oder ein Rückschaltsignal R vorliegt. Dies kann bspw. dadurch geschehen, daß bipolare Signale verwendet werden, bei dem eine positive Spannung Uₛ einem Hochschaltsignal H oder eine negative Spannung Uₛ einem Rückschaltsignal R entspricht. Das Ausgangssignal der Erkennungsstufe 18 wird einem ersten Eingang 19 eines automatisierten Stufengetriebes 22 zugeführt, um dort je nachdem einen Hochschaltvorgang oder einen Rückschaltvorgang auszulösen.

Weiterhin muß dem Stufengetriebe 22 ein Signal zugeführt werden, daß den Schaltvorgang auslöst. Im Rahmen der vorliegenden Erfindung ist eine wegabhängige Auslösung bevorzugt. Hierzu wird das Ausgangssignal der Erkennungsstufe 18 einer Auslösestufe 20 zugeführt, die im wesentlichen die Funktion einer Schwellwertstufe hat. Deren Ausgang ist wiederum auf einen zweiten Eingang 21 des Stufengetriebes 22 geführt. Im Ergebnis bedeutet dies, daß der Schaltvorgang (Hoch- oder Rückschaltung) dann ausgelöst wird, wenn der Schalthebel 10 um einen bestimmten Weg oder Winkel aus seiner Neutralstellung 11 ausgelenkt wurde.

Die Ausgangsspannung Uₛ des Wandlers 16 gelangt ferner auf eine Differenzierstufe 24, in der die erste zeitliche Ableitung der Spannung Uₛ gebildet wird. Es entsteht dann ein der Auslenkgeschwindigkeit proportionales Signal Uᵥ. Das Signal Uᵥ wird nun einer Kennlinienstufe 26 mit degressiver Kennlinie zugeführt. Die Kennlinienstufe 26 erzeugt an ihrem Ausgang ein Signal tₛ, das einem dritten Eingang 27 des automatisierten Stufengetriebes 22 zugeführt wird. Das Signal tₛ bewirkt eine Einstellung der Dauer des Schaltvorganges.

Unter "Einstellung der Dauer des Schaltvorgangs" ist in diesem Zusammenhang nicht notwendigerweise eine ein-eindeutige Zuordnung zu verstehen. Vielmehr ist es so, daß ein bestimmter Eingangswert (z.B. ein bestimmter Wert der Auslenkgeschwindigkeit des Schalthebels 10) zu durchaus unterschiedlichen effektiven Schaltzeiten führen kann. Dies hängt unter anderem davon ab, in welchem Zustand sich das Getriebe befindet. So ergeben sich z.B. Unterschiede dann, wenn hoch- oder rückgeschaltet werden soll oder wenn der Schaltvorgang im Zug- oder Schubbetrieb stattfindet oder wenn die Motordrehzahl im Augenblick des Schaltvorganges relativ hoch oder niedrig ist. Die Gesamtdauer des Schaltvorganges umfaßt nämlich unter anderem das Öffnen und anschließende Schließen der Kupplung, das Abregeln des Motormomentes während der Schaltdauer zum Vermindern des Schaltrucks, das Bestromen der Schaltventile, deren Schaltzeiten usw. Im allgemeinen ist daher die Einwirkung auf die Dauer des Schaltvorganges eher tendenziell zu verstehen, wobei die genaue Dauer des Schaltvorganges für jeden Einzelfall von einer Vielzahl von Parametern abhängen kann.

Es ist weiterhin zu berücksichtigen, daß die am Ausgang der Blöcke 16 und 24 auftretenden Signale Uₛ und Uᵥ (analog ebenso bei den etwas komplizierteren weiteren Ausführungsbeispielen, die weiter unten geschildert werden) zusätzlich zeitabhängig sind. Man muß daher die Eingangsgröße für die Kennlinienstufe 26 entweder durch Mittelwertbildung feststellen oder einen bestimmten Wert als Eingangswert zu einem bestimmten Zeitpunkt oder an einem bestimmten Punkt der Auslenkung des Schalthebels 10 definieren. Besonders bevorzugt ist, am Eingang der Kennlinienstufe 26 denjenigen Wert Uᵥ für die weitere Verarbeitung in der Kennlinienstufe 26 vorzusehen, der im Augenblick der Auslösung des Schaltvorganges anliegt, d.h. zu dem Zeitpunkt, zu dem am Ausgang der Auslösestufe 20 ein Schaltsignal erscheint.

Die Kennlinie in der Kennlinienstufe 26 ist degressiv ausgebildet. Unter "degressiv" kann dabei eine lineare Funktion, eine hyperbolische Funktion, eine exponentielle Funktion oder dgl. verstanden werden. Selbstverständlich kann die Kennlinie sowohl in analoger als auch in digitaler Form in der Kennlinienstufe 26 gespeichert sein. In jedem Falle ist bevorzugt, wenn infolge des degressiven Charakters der Kennlinie ein hohes Eingangssignal Uᵥ zu einem entsprechend kleinen Ausgangssignal tₛ führt. Dies bedeutet insgesamt, daß eine schnelle Verstellung des Schalthebels 10 zu einer kurzen Schaltdauer führt bzw. eine langsame Verstellung des Schalthebels 10 zu einer entsprechend längeren Schaltdauer.

Bei der in Fig. 2 dargestellten ersten Variante des Ausführungsbeispiels gemäß Fig. 1 ist hinter die Differenzierstufe 24 und vor die Kennlinienstufe 26' eine weitere Differenzierstufe 28 geschaltet. Das Ausgangssignal U_{b} der weiteren Differenzierstufe 28 entspricht damit der Beschleunigung der Verschwenkbewegung des Schalthebels 10. Da die Anordnung im übrigen unverändert ist, bedeutet dies, daß eine hohe Beschleunigung beim Verschwenken des Schalthebels 10 zu einer kurzen Schaltdauer führt bzw. eine geringe Beschleunigung zu einer entsprechend längeren Schaltdauer.

Bei der in Fig. 3 dargestellten zweiten Variante des Ausführungsbeispiels gemäß Fig. 1 wird statt der Auslenkung (Weg oder Winkel) des Schalthebels 10 die Betätigungskraft F gemessen, zu welchem Zweck ein Kraft-/Spannungswandler 30 vorgesehen ist, der die Kraft F in eine entsprechende Spannung U_{F} umsetzt. Das der Betätigungskraft entsprechende Signal U_{F} wird nun über eine Differenzierstufe 32 oder über zwei Differenzierstufen 32, 34 geleitet, ehe es auf eine Kennlinienstufe 36 gelangt. Die Differenzierstufen 32, 34 entsprechend dabei den Differenzierstufen 24, 28 gemäß Fig. 2 und die Kennlinienstufe 36 entspricht den Kennlinienstufen 26' bzw. 26 in Fig. 2 und 1. Folglich führt eine hohe Betätigungskraft F zu einer kurzen Schaltzeit und eine geringe Betätigungskraft F zu einer entsprechend längeren Schaltzeit.

Bei dem in Fig. 3 dargestellten, kraftgesteuerten Ausführungsbeispiel der Erfindung bezieht sich die Kraftsteuerung in bevorzugter Weise lediglich auf die Beeinflussung der Schaltdauer, nicht jedoch auf die Festlegung des Zeitpunktes, zu dem der Schaltvorgang ausgelöst wird. Auch im Ausführungsbeispiel gemäß Fig. 3 wird bevorzugt insoweit eine Wegsteuerung eingesetzt, wie sie beim Ausführungsbeispiel gemäß Fig. 1 durch die Elemente 18, 20 und 21 dargestellt und weiter oben erläutert wurde. Insofern ist in Fig. 3 auch eine Eingangsgröße s als Wegsteuerung für das Auslösen des Schaltvorganges vorgesehen.

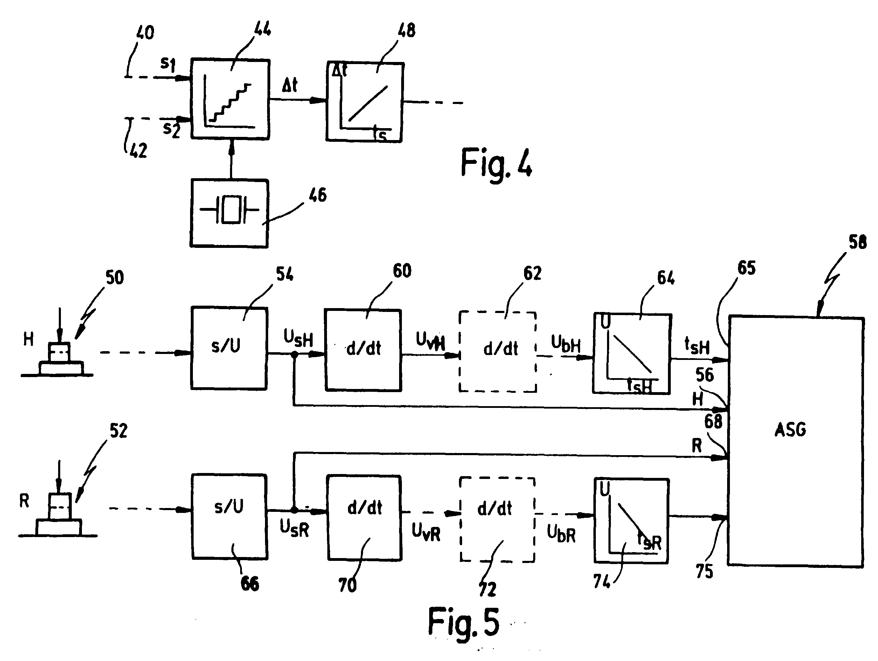

Bei der in Fig. 4 dargestellten dritten Variante des Ausführungsbeispiels gemäß Fig. 3 wird eine modifizierte Geschwindigkeitsmessung durchgeführt.

Hierzu ist der Schalthebel 10 mit zwei Schaltkontakten s₁ und s₂ versehen, die beim Verschwenken des Schalthebels 10 nacheinander betätigt werden. Es versteht sich, daß die Schaltkontakte s₁ und s₂ für beide Schaltrichtungen vorgesehen werden können, d.h. für die Auslenkung des Schalthebels 10 aus der Neutralstellung 11 in die Hochschaltstellung 12 bzw. die Rückschaltstellung 13. Man kann natürlich den ersten Schaltkontakt s₁ auch in die Neutralstellung 11 verlegen, so daß jeweils nur ein zweiter Schaltkontakt s₂ für jede der beiden Schaltrichtungen erforderlich ist. Folglich entstehen zwei nacheinander auftretende Positionssignale 40, 42, die zum Starten bzw. Stoppen eines nachgeschalteten Zählers 44 eingesetzt werden. Dem Zähler 44 werden Impulse eines Impulsgenerators 46 zugeführt. Am Ausgang des Zählers 44 liegt dann ein Wert an, der der Zeitdauer Δt entspricht, die vom Schalthebel 10 für das Durchmessen des Weges zwischen den beiden Schaltkontakten s₁ und s₂ benötigt wurde. Bei hoher Auslenkgeschwindigkeit ist das Signal Δt daher klein und bei geringer Auslenkgeschwindigkeit groß. In einer nachgeschalteten Kennlinienstufe 48 hat die Kennlinie in diesem Fall daher einen progressiven Verlauf.

Es versteht sich, daß der zweite Schaltkontakt s₂ bei diesem Ausführungsbeispiel zum Erzeugen des Auslösesignals herangezogen werden kann (vergleiche Elemente 18, 20 und 21 in Fig. 1).

Fig. 5 zeigt schließlich ein weiteres Ausführungsbeispiel einer erfindungsgemäßen Einrichtung. In diesem Fall wird statt eines in zwei Richtungen verstellbaren Schalthebels ein Paar von Schaltern 50, 52 verwendet, von denen der Schalter 50 bspw. zum Hochschalten und der Schalter 52 zum Rückschalten dient. Die Schalter 50, 52 können insbesondere in ein Lenkrad eines Kraftfahrzeugs integriert sein.

Der Hoch-Schalter 50 ist im dargestellten Ausführungsbeispiel mit einem Weg-/Spannungswandler 54 verbunden, dessen Ausgangssignal U_{sH} auf einen Hochschalt-Eingang 56 eines automatisierten Stufengetriebes 58 geführt ist sowie ferner auf eine erste Differenzierstufe 60. Das Ausgangssignal U_{vH} der ersten Differenzierstufe 60 ist auf eine zweite Differenzierstufe 62 geführt. Deren Ausgangssignal U_{bH} ist schließlich auf eine Kennlinienstufe 64 mit degressiver Kennlinie geführt. Am Ausgang der Kennlinienstufe 64 liegt ein Signal t_{sH} an, das einem ersten Steuereingang 65 des automatisierten Stufengetriebes 58 zugeführt wird.

In entsprechender Weise ist im Rückschaltzweig gemäß Fig. 5 ein Weg-/Spannungswandler 66 vorgesehen, der an den Rück-Schalter 52 angeschlossen ist und dessen Ausgangssignal U_{sR} auf einen Rückschalt-Eingang 68 des automatisierten Stufengetriebes 58 sowie auf eine erste Differenzierstufe 70 geführt ist. Deren Ausgangssignal U_{vR} kann auf eine zweite Differenzierstufe 72 geführt sein, deren Ausgangssignal U_{bR} an einer Kennlinienstufe 74 mit degressiver Kennlinie anliegt. Deren Ausgangssignal t_{sR} ist auf einen zweiten Steuereingang 75 des automatisierten Stufengetriebes 58 geführt.

Wenn der Fahrer den Hoch-Schalter 50 betätigt, wird ein entsprechendes elektrisches Steuersignal U_{sH} gebildet, das über den Hochschalt-Eingang 56 eine Hochschaltung auslöst. Die Schaltzeit wird z.B. aus der Geschwindigkeit oder der Beschleunigung beim Betätigen des Hoch-Schalters 50 über die Differenzierstufe 60 oder die Differenzierstufen 60, 62 in Verbindung mit der Kennlinienstufe 64 bestimmt, wie dies bereits weiter oben anhand der Ausführungsbeispiele gemäß Fig. 1 bis 4 geschildert wurde. Entsprechendes gilt für den Rückschaltvorgang beim Betätigen des Rück-Schalters 52.

Wie bereits erwähnt wurde, können die Schaltelemente 10 bzw. 50, 52 entweder als Schalthebel zwischen den Vordersitzen des Kraftfahrzeugs oder als Schaltwippe bzw. Drucktasten, insbesondere auf dem Lenkrad des Kraftfahrzeugs ausgebildet sein. Zur Aufnahme der Betätigungssignale können z.B. Potentiometer, Kraftdosen, Piezoelemente und dgl. eingesetzt werden.

Selbstverständlich ist es auch möglich, mehrere physikalische Größen miteinander zu verkoppeln, ebenso wie in der Auswahl der Kennlinien hinsichtlich Vorzeichen und Kennliniensteigung ein großer Spielraum besteht.

Schließlich kann die erfindungsgemäße Einrichtung in vorteilhafter Weise mit herkömmlichen Steuereinrichtungen gekoppelt werden, bspw. unterschiedlichen Schaltprogrammen sowie adaptiven Getriebesteuerungen.

## Patentansprüche

1. Verfahren zum Steuern eines automatisch schaltbaren Getriebes (22; 58) eines Kraftfahrzeugs, bei dem in Abhängigkeit von einer manuellen Betätigung eines Schaltelementes (10; 50, 52) das Getriebe (22; 58) servomechanisch hoch- oder rückgeschaltet wird, dadurch gekennzeichnet, daß die Dauer (tₛ) des Schaltvorganges individuell für jeden Schaltvorgang in Abhängigkeit von einer physikalischen Größe (s, v, b, F) der manuellen Betätigung des Schaltelementes (10; 50, 52) eingestellt wird.

2. Verfahren nach Anspruch 1, dadurch gekennzeichnet, daß die Dauer (tₛ) des Schaltvorganges in Abhängigkeit von der Geschwindigkeit (v) der manuellen Betätigung des Schaltelementes (10; 50, 52) eingestellt wird.

3. Verfahren nach Anspruch 1 oder 2, dadurch gekennzeichnet, daß die Dauer (tₛ) des Schaltvorganges in Abhängigkeit von der Beschleunigung (b) der manuellen Betätigung des Schaltelementes (10; 50, 52) eingestellt wird.

4. Verfahren nach einem oder mehreren der Ansprüche 1 bis 3, dadurch gekennzeichnet, daß die Dauer (tₛ) des Schaltvorganges in Abhängigkeit von der Kraft (F) der manuellen Betätigung des Schaltelementes (10; 50, 52) eingestellt wird.

5. Verfahren nach einem oder mehreren der Ansprüche 1 bis 4, dadurch gekennzeichnet, daß die Dauer (tₛ) des Schaltvorganges in Abhängigkeit von einer zeitlichen Änderung der Kraft (F) der manuellen Betätigung des Schaltelementes (10; 50, 52) eingestellt wird.

6. Verfahren nach einem oder mehreren der Ansprüche 1 bis 5, dadurch gekennzeichnet, daß die Dauer (tₛ) des Schaltvorganges mit zunehmender physikalischer Größe (s, v, b, F) verkürzt wird.

7. Vorrichtung zum Steuern eines automatisch schaltbaren Getriebes (22; 58) eines Kraftfahrzeugs, bei der in Abhängigkeit von einer manuellen Betätigung eines Schaltelementes (10; 50, 52) das Getriebe servomechanisch hoch- oder rückgeschaltet wird, dadurch gekennzeichnet, daß Mittel vorgesehen sind, um die Dauer (tₛ) des Schaltvorganges individuell für jeden Schaltvorgang in Abhängigkeit von einer physikalischen Größe (s, v, b, F) der manuellen Betätigung des Schaltelementes (10; 50, 52) einzustellen.

8. Vorrichtung nach Anspruch 7, dadurch gekennzeichnet, daß die Mittel einen mit dem Schaltelement (10; 50, 52) gekoppelten Sensor (16; 30; 44, 46; 54, 66) umfassen, der die physikalische Größe (s, v, b, F) in ein elektrisches Signal (U) umwandelt, und daß der Sensor (16; 30; 44, 46; 54, 66) über eine Kennlinienstufe (26; 26' 36; 48; 64, 74) mit einem Steuereingang (27; 65, 75) des Getriebes (22; 58) in Wirkverbindung steht.

9. Vorrichtung nach Anspruch 8, dadurch gekennzeichnet, daß der Sensor (16; 54, 66) ein Wegsensor ist.

10. Vorrichtung nach Anspruch 8, dadurch gekennzeichnet, daß der Sensor (16, 24; 44, 46; 54, 60, 66, 70) ein Geschwindigkeitssensor ist.

11. Vorrichtung nach Anspruch 8, dadurch gekennzeichnet, daß der Sensor (16, 24, 28; 54, 60, 62, 66, 70, 72) ein Beschleunigungssensor ist.

12. Vorrichtung nach Anspruch 8, dadurch gekennzeichnet, daß der Sensor (30) ein Kraftsensor ist.

13. Vorrichtung nach einem oder mehreren der Ansprüche 8 bis 12, dadurch gekennzeichnet, daß die Kennlinienstufe (26; 26', 36; 48; 64, 74) eine degressive Kennlinie aufweist, derart, daß eine zunehmende physikalische Größe (s, v, b, F) in eine abnehmende Dauer (tₛ) des Schaltvorganges umgesetzt wird.

14. Vorrichtung nach einem oder mehreren der Ansprüche 7 bis 13, dadurch gekennzeichnet, daß das Schaltelement als ein in zwei Schaltrichtungen (H, R) verschwenkbarer Schalthebel (10) ausgebildet ist.

15. Vorrichtung nach einem oder mehreren der Ansprüche 7 bis 14, dadurch gekennzeichnet, daß das Schaltelement als zwei separate Schalter (50, 52) für jeweils eine Schaltrichtung (H, R) ausgebildet ist.

16. Vorrichtung nach einem oder mehreren der Ansprüche 7 bis 15, dadurch gekennzeichnet, daß das Schaltelement als eine in zwei Schaltrichtungen (H, R) verschwenkbare, vorzugsweise am Lenkrad angeordnete Schaltwippe ausgebildet ist.
